# Europäisches Patentamt

## European Patent Office

## Office européen des brevets

(11) Publication number: **0 136 378**
**B1**

(12) **EUROPEAN PATENT SPECIFICATION**

(45) Date of publication of patent specification: **09.03.88**

(51) Int. Cl.⁴: **C 04 B 12/02**

(21) Application number: **83305756.5**

(22) Date of filing: **27.09.83**

(54) Composition and process for forming inorganic resins.

(43) Date of publication of application:
**10.04.85 Bulletin 85/15**

(45) Publication of the grant of the patent:
**09.03.88 Bulletin 88/10**

(84) Designated Contracting States:
**DE FR GB IT**

(56) References cited:
**EP-A-0 063 344**
**DE-A-2 657 014**
**DE-B-1 109 230**
**FR-A-2 455 691**
**GB-A- 943 677**
**US-A-3 148 996**
**US-A-4 324 592**
**US-A-4 394 174**

(73) Proprietor: **USG Interiors, Inc.**
**101 South Wacker Drive**
**Chicago Illinois 60606 (US)**

(72) Inventor: **Prior, William L.**
**95 North 10th Street**
**Newark Ohio 43055 (US)**
Inventor: **Sargeant, William C.**
**988 S. Hess Mill Road**
**Bolivar Ohio 44622 (US)**

(74) Representative: **Spencer, Graham Easdale et al**
**A.A. Thornton & CO Northumberland House**
**303-306, High Holborn**
**London WC1V 7LE (GB)**

Courier Press, Leamington Spa, England.

0 136 378

**Description**

This invention is concerned with compositions and processes for forming inorganic resins and articles of manufacture including such inorganic resins disposed on a support surface and, more particularly, to inorganic resin cements having a unique combination of properties and a wide range of uses. The inorganic resin cements of the present invention may be formed as noncellular structures.

A number of inorganic resin cement systems are known. Some are formed of magnesium oxychlorides or magnesium oxysulfates (US—A—3,320,077; US—A—4,141,744; and US—A—4,315,967); and others are formed using phosphates and magnesia. Exemplary of this latter type are compositions of an acid magnesium phosphate, magnesia, silica, mineral fibers and water in an amount from 70 to 140% of the weight of the remaining components (US—A—3,752,684); compositions in which a low reactivity magnesia is reacted with an acid aluminum phosphate complex containing an anion of a mineral acid (other than an oxyphosphorus acid) or of a carboxylic acid (US—A—3,923,534); and compositions formed of a solution of an acid and aluminum phosphate (e.g., Al(PO$_4$)$_3$) slurried with silica, alumina and magnesia (US—A—3,991,254). The insulating materials of US—A—3,752,684 require the removal of large amounts of water at elevated temperatures; the cold setting refractory materials of US—A—3,923,534 require extended periods (e.g., 6—8 hours) to set and the slurries used to form the insulating structures of US—A—3,991,254 must be fired at 500°C or above. Finally, mono-ammonium and diammonium phosphates have been reacted with dead-burned magnesium oxide. These compositions have a number of inherent disadvantages, among which are intense ammonia odor and the formation on top of the resulting cements of a phosphate solution residue.

French Patent 2445691 describes an inorganic cement system consisting of a mixture of two separate components: (1) a slush of magnesium oxide, sand, and a light coloured process oil, and (2) an aqueous solution of ammonium diacid phosphate. It is mentioned that the addition of a surfactant to either or both of the two components results in improved ease of mixing of the components, but that addition of too much surfactant may result in an inferior modulus of rupture.

Generally such prior art inorganic resin systems using phosphates and magnesia have been of a character which has limited their uses to such applications as refractory linings, thermal insulation and use in preparing fast-setting, bonded aggregate structures as replacements for cements and mortars.

We have now found that improved inorganic resins can be formed by an exothermic reaction between one or both of mono aluminium phosphate and mono magnesium phosphate, and one or both of wollastonite and magnesium oxide, in the presence of a non-reactive phosphate dispersing agent. The rapid exothermic reaction drives off any water in the liquid reaction mixture without the use of externally applied heat. Further, the use of relatively inexpensive materials compared to typical organic resins offers a number of advantages over many of the organic resins destined for similar applications. The inorganic resins of the present invention can be formulated to be essentially nonflammable, strong and resistant to water and most chemicals including acids, alkalies and organic solvents.

The inorganic resins of the present invention can replace at least a portion of the presently known organic resins in a wide range of applications, for example molded configurations (in cellular and noncellular structures); thermal, electrical and/or acoustical insulations; binders and adhesives; coatings and or surfacing agents; patching compositions, man-made boards including organic, for example cellulosic, fibers and/or inorganic fibers, such as fiberglass and the like.

According to the present invention, there is provided a two-component system for mixing to form an inorganic resin, which comprises

(a) a liquid component (A) comprising an aqueous solution of mono aluminium phosphate (aluminium dihydrogenophosphate) and/or mono magnesium phosphate (magnesium hydrogenophosphate), and

(b) a liquid component B comprising an aqueous suspension of a phosphate-reactive constituent which is wollastonite and/or magnesium oxide, the viscosity of each component being such that the two components can be rapidly and thoroughly mixed so as to form a slurry which reacts exothermically to form an inorganic resin, characterised in that component B additionally comprises a non-reactive phosphate dispersing agent and in that components A and B each have a viscosity of from 700 to 10,000 centipoises at 25°C.

An unreactive low-water demand filler, e.g., silica, milled fibers or a preformed cellular material may, if desired, be added to component A. Wollastonite also may be added to component A to give the resin added resistance to cracking. The resin may be made in cellular form by adding a blowing agent, preferably calcium carbonate, to component B and a surfactant to either or both components.

The two liquid components A and B are mixed to form a reactive inorganic resin cement mixture immediately prior to applying the resin mixture on to a resin cement support surface. Component B has a viscosity in the range 7000 to 10,000 centipoises at 25°C such that it can be rapidly and thoroughly mixed with component A to form a slurry which reacts exothermically to set up as inorganic resin. Set up times, once the two liquid components are mixed, range from 30 seconds to several minutes. The two liquid components can be mixed in a continuous mixing head to form the resin cement mixtures as the mixture is sprayed from the mixing head toward a resin cement support surface. The resin cement support surface can be any surface capable of supporting the resin cement surface during set-up, for example, a fiberglass mat or a rigid mold. The two liquid components form a reactive slurry and the reaction begins upon mixing

2

and continues exothermically during set-up and curing driving away any water in the mixture without the need for any externally applied heat. The resin is completely cured without any externally applied heat within a period ranging from several hours to several days.

The phosphate reactive constituent of component B may be reactive wollastonite, defined herein as wollastonite having an aspect ratio less than about 10:1, magnesium oxide having a relatively low surface area for example, dead-burned magnesium oxide or any other magnesium oxide having a surface area in the range of 0.1 $m^2/g$ to 5 $m^2/g$; or mixtures thereof. The inorganic resins formed by reaction between components A and B are characterised by good strength; non-flammability; resistance to heat, chemicals, including water, and ultra-violet radiation; and by their adaptability to being formed into structural configurations. The resin may also include fillers, such as silica, milled fibers, preformed cellular materials, and the like, as well as non-reactive wollastonite, defined as wollastonite having an aspect ratio of at least 15:1. These additives contribute to the various desired properties of the resin. Finally, the resins may be cellular in form, the preferred size of the cells ranging from ultrafine to medium.

The inorganic resins of this invention are formed by providing two separate liquid components capable of extended shelf life when separated and immediate reaction which when mixed to form the resin. The reaction is exothermic and no additional heat is required to accomplish resin set-up and final cure. The quantity of water in the mixture of components should be maintained at a low level, for example less than 40% of the total weight of the mixture, and preferably less than 25% of the total mixture weight, to minimize the amount which must be removed during curing. The total water in the mixture is preferably less than 30% of the total weight of components A and B to increase resin stability and integrity while permitting set-up times ranging from as little as 30 seconds to several (for example, 15) minutes and cure times of the order of a few hours to a few days. The resins may be formed with or without cells and include a unique combination of properties including high strength; good thermal, electrical and acoustical insulative properties; chemical and moisture resistance; nonflammability and nonsmoking. The structure of the cellular forms may be varied to provide materials of varying densities.

The viscosities of the two liquid components are in the range 700 to 10,000 centipoises (mPas) at 25°C and they are matched, typically ±25%, in viscosities to permit rapid and thorough mixing of the components. The ensuing reaction upon mixing is exothermic and rapid. The liquid times, set-up times, and foaming times, as well as the physical properties and physical forms of the resin can be predetermined through the addition of various constituents to the two components. This will be made apparent from the following detailed description of the two liquid components and the examples.

To achieve the full advantage of the present invention the amount of water in each component A and B should, as already stated, be minimized provided the two components are pourable and easily mixable liquids. Excess water, for example more than about 40% based on the total weight of components A and B, may result in shrinking and cracking, steam explosion, and/or bond rupturing in the resins during setting and curing as well as during any subequent use of the resins at elevated temperatures. The exothermic reaction of components A and B provides a controlled source of energy sufficient to remove any water from the mixture while maintaining the structure of the resin. Resin configurations, e.g., sheets, bricks, panels, molded and extruded structures and the like can be formed within minutes without any additional energy input. These configurations exhibit good dimensional stability, remaining essentially unchanged during their subsequent use.

The reactive wollastonite used in component B reacts rapidly with mono magnesium phosphate and/or mono aluminum phosphate to form an inorganic resin cement, while being relatively non-reactive with phosphoric acid or other acid phosphate salts. This unexpected reaction between wollastonite and mono aluminum phosphate or mono magnesium phosphate permits the use of 0+ to 100−% reactive wollastonite as the phosphate reactive constituent in component B, the remainder of the phosphate reactive constituent, if any, being magnesium oxide.

The nature of components A and B and preferred features thereof will now be described in greater detail.

## Component A

The mono aluminum phosphate and mono magnesium phosphate of component A are preferably supplied in the form of clear syrupy aqueous solutions, the water in the solutions providing the liquid vehicle for component A to have a viscosity of from 700 to 10,000 centipoises at 25°C.

Exemplary of a suitable mono aluminum phosphate solution is one analyzing 8% $Al_2O_3$ and 33.7% $P_2O_5$, (solids concentration of 50 weight %) and having a specific gravity of 1.47, a pH of 1.0 and a Baume value of 47.5°. Exemplary of a suitable mono magnesium phosphate solution is one analyzing 5.3% MgO and 32.6% $P_2O_5$, (solids concentration of 44 weight %) and having a specific gravity of 1.38, a pH of 1.2 (1% solution) and a Baume value of 42.9°. The amount of aqueous mono aluminum phosphate and/or mono magnesium phosphate solution in component A is preferably from 20% to 70% by weight of the total weight of components A and B, when mixed. The amount of phosphate constituent (solid basis) is preferably from 10% to 35% by total weight of components A and B.

Generally, the use of mono aluminum phosphate is preferred over mono magnesium phosphate for forming cellular resins when a chemical blowing agent is used since the resulting resins exhibit somewhat better high temperature resistance. On the other hand, mono magnesium phosphate generally forms resins having greater strength. A mixture of the two phosphate constituents provides resins having a desired combination of strength and high temperature resistance.

One or more inert, low water-demand fillers may be added to component A to form inorganic resins having various physical characteristics. To achieve the full advantage of the present invention, the fillers require no more than about 30 ml water to make a flowable paste of 100 g of filler. Exemplary of suitable fillers are silica (minus 0.043 mm=minus 325-mesh), mineral or glass milled fibers, powdered glass, glass beads, flint, titania, some clays, and varytes, as well as mixtures of two or more of these. The filler may be present in an amount up to 50% by weight of the total weight of components A and B, the amount being determined by such factors as water demand, component viscosity required, and physical characteristics desired of the final inorganic resins.

If it is desired to form a syntactic cellular structure, that is one incorporating preformed cellular fillers, then such fillers may be added to component A. A number of different types of such preformed cellular fillers are available, including glass, ceramic or synthetic organic resins bubbles, and vermiculite. The cellular filler also should not require more than about 30 ml water to make a flowable paste of 100 g of filler. The amount of cellular filler to be added will depend upon the cellular structure desired in the final resin and may depend upon the final viscosity of component A needed for compatibility with component B. The total amount of all types of fillers added is preferably up to 50% by weight of the total weight of components A and B.

In some resin formulations, particularly those having a cellular structure formed by a blowing or foaming agent, wollastonite in a form which is substantially unreactive is added to the mono aluminum phosphate and/or mono magnesium phosphate of component A. A typical less reactive form of wollastonite useful in accordance with this embodiment of the present invention is a finely divided acicular material having an aspect ratio of at least 15 to 1 and a surface area of less than 1.0 $m^2/g$. It is a naturally occurring mineral which is essentially pure calcium metasilicate, $CaSiO_3$, having a molecular weight of 116. Surprisingly, the addition of the less reactive wollastonite to component A reduces cracks and shrinkage in the inorganic resins formed. The less reactive wollastonite, when added to component A in accordance with this embodiment of the present invention, is preferably added in an amount up to 10%, and more preferably up to 5%, by total weight of components A and B. To achieve an exceptionally long storage life of component A, the less reactive wollastonite fibers of component A should be added shortly before components A and B are mixed to prevent any premature reaction of the wollastonite fibers with the mono aluminum or mono magnesium phosphate, since even the less reactive wollastonite, as defined herein, reacts with the phosphate.

The liquid component A preferably includes a water-repellant surfactant in an amount of from 0.2% to 5% by total weight of components A and B, when a blowing agent is included to form the inorganic resins in cellular form. This surfactant stabilizes the foam during formation and set-up and controls the cell size and density of the final cellular resin. The surfactant is preferably a non-carbonizing surfactant, such as hydrophobic fumed silica, silicone or a titanate, to prevent formation of carbon within the resin during set-up and curing. If carbonization can be tolerated, surfactants such as calcium, zinc or aluminum stearate may be used. A small amount of such water-repellent surfactants may be added to component A or B or both in formulating non-cellular structures, as well as cellular structures.

It may be desirable to control and predetermine the profile of water release from the resin of the present invention during cure and subsequent heating of the resins for particular resin uses. Water release can be controlled by replacing all or part of the inert, low water-demand filler, such as silica, with a chemically hydrated, water-releasing material, such as finely divided hydrated alumina, $Al_2O_3 \cdot 3H_2O$. The use of such a water-releasing material is illustrated in Example 13.

In formulating component A, the aqueous solution of mono aluminum phosphate and/or mono magnesium phosphate is preferably prepared by adding water to the phosphate(s) to provide the predetermined concentration of phosphate reactant in water. This liquid is preferably maintained at a temperature around 15°C (about 60°F) to prevent overheating during component mixing.

The less reactive wollastonite, fillers and surfactants, if any, are added to the liquid and mixed to form a slurry ready for the mixing with component B.

Component B

Component B provides a phosphate-reactive constituent which may be wollastonite and/or magnesium oxide. The wollastonite of component B is distinguished from that which may be optionally added to component A in that it is of an acicular form having an aspect ratio of 10 or less. The reactive wollastonite of component B preferably has an aspect ratio of less than 8:1 and, more preferably, about 5:1. The surface area of the reactive wollastonite is preferably at least 1.0 $m^2/g$ and, more preferably, at least 1.25 $m^2/g$. A typical reactive wollastonite useful in accordance with the present invention has a surface area of about 1.55 $m^2/g$. Like the wollastonite of component A, it is essentially pure calcium metasilicate, but unlike the material with the much higher aspect ratio, it is highly reactive with the mono aluminum or mono magnesium phosphate constituent. The use of at least some reactive wollastonite as the phosphate-reactive constituent minimizes cracks and shrinkage in the final resin. The amount of reactive wollastonite in component B is preferably up to 40% by weight of the total weight of components A and B.

The magnesium oxide used in component B can be considered to have a relatively low reactivity when

4

compared with so-called reactive magnesium oxides having surface areas of at least 5 m²/g. The magnesium oxide used preferably has a surface area of less than 2.0 m²/g, and more preferably 1.0 m²/g or less. A typical magnesium oxide useful in accordance with the present invention has a surface area of 0.75 m²/g and is classified as high density, low reactivity magnesium oxide. The magnesium oxide is preferably finely ground and sized to pass a 0.043 mm (325-mesh) screen. The amount of this magnesium oxide in component B is preferably up to 50% by weight of the total weight of components A and B. In general, the more magnesium oxide added, the more reactive is the mixture and the shorter is the resin set time. The addition of some magnesium oxide imparts added strength to the final resin.

When both wollastonite and magnesium oxide are used as the phosphate-reactive constituent in component B, the relative amounts of these reactants may extend over the entire range of from 0+ to 100−%. The weight ratio of phosphate solution of component A to phosphate-reactive constituent of component B is preferably from 50/50 to 65/35, and more preferably from 55/45 to 60/40, for example 58/42. This in turn means that the ratio of phosphate on a dry basis/phosphate reactive constituent is preferably from 25/75 to 35/65 with a typical ratio being 29/71.

The dispersing agent of component B is an aqueous phosphate dispersant and is preferably sodium hexametaphosphate, sodium tripolyphosphate, sodium acid pyrophosphate, trisodium phosphate, or tripotassium phosphate. The dispersing agent should be essentially unreactive with the other resin components under the conditions of formulation and mixing. When a non-cellular resin is formed with mono aluminum phosphate in accordance with one embodiment of the present invention, the dispersing agent is preferably sodium tripolyphosphate, sodium hexametaphosphate, sodium acid pyrophosphate or mixtures of two or more thereof. One or more of these dispersing agents when used with mono aluminum phosphate to form a noncellular resin provides resins with unexpectedly better strength than other non-reactive dispersing agents. The concentration of the dispersing agent in aqueous solution and the amount of such solution are chosen to effect the required dispersing action and to supply the liquid vehicle of component B to the desired viscosity. The optimum amount of any particular dispersing agent may be readily determined for any selected resin composition. As will be seen in Example 11, when a chemical blowing agent, such as calcium carbonate, is used to form a cellular resin, then the dispersing agent must be chosen to maintain the pH of component B below about 10 to permit the release of carbon dioxide.

One or more inert, low water-demand fillers of the type added to component A, as described above, may also be added to component B. If such an inert filler is incorporated in both components A and B, then the total quantity added may amount to about 50% by total weight of components A and B.

Cellular structures can be formed by using a chemical blowing agent capable of producing a gas during the mixing of components A and B. The blowing agent is added to component B. The blowing agent should be one capable of releasing a gas either by reaction, decomposition or vaporization in the acid slurry formed when components A and B are mixed. Although it is possible to use other inorganic carbonates, for example sodium carbonate and sodium bicarbonate, it is preferred to use calcium carbonate sized to pass a 0.043 mm (325-mesh) screen. By adjusting the amount of calcium carbonate, it is possible to form cellular inorganic resins having densities of from 10 to 50 pounds/cubic foot (53.4 to 267 kg/m³). The amount of blowing agent added to component B is preferably from 0.2% to 15% more preferably from 0.5% to 6%, by total weight of components A and B.

When mono magnesium phosphate is used as the phosphate reactive constituent, dipotassium phosphate, tripotassium phosphate, tripolyphosphate, tetrapotassium phosphate or mixtures of two or more thereof provide inorganic resin cements with strengths which are at least double the strengths achieved with other dispersing agents tested. These particular dispersing agents react with mono aluminum phosphate and are therefore not suitable in formulations where mono aluminum phosphate is at least 10% of the total weight of the phosphate reactive constituent.

Cellular resins also can be made using an inert compressed gas, such as carbon dioxide or air, as a physical blowing agent. The physical blowing agent may be introduced into the mixer as components A and B are mixed or bled into the front of a static mixer when a static mixer is used for mixing.

The water-repellant surfactant which may optionally be added to component A, may also be added to component B either in addition to or in place of that added to component A. The total quantity added to components A or B or both should not be more than 5% by total component weight.

In formulating component B, the aqueous solution of the dispersing agent provides the liquid vehicle and to it are added, with stirring, the phosphate-reactive constituent (wollastonite and/or magnesium oxide) along with the blowing agent, if used, and any additional fillers and surfactants. Component B, like component A, is preferably cooled to about 15°C prior to mixing. Extended shelf life for component B can be achieved by formulating component B in dry form and adding water prior to mixing components A and B.

Components A and B may be mixed in any type of blender, mixer or mixing head suitable for rapidly and thoroughly blending two slurries of the viscosity range specified. Such mixers include those equipped with blades, continuous mixing heads and static mixers. The viscosity of the slurry mixture rises rapidly and sufficient heat is developed in the ensuing exothermic reaction to vaporize any excess water as steam. By choice of reactants, the time over which the mixture remains liquid may be varied between some 30 seconds to as much as 10 minutes. Likewise, in forming cellular resins, the "foam rise" time may be adjusted and varied between about one minute and 5 minutes and the "foam set" time between about 1.5

5

and 10 minutes. As noted previously, the water-repellent surfactant stabilizes the cellular resin during foaming and set-up, that is, it prevents cell collapse until the resin sets. Complete curing of the resin takes place at ambient temperature and requires a relative short time, for example from several hours to a few days.

The liquid mixture of components A and B may, prior to set-up, be formed into any desired configuration by molding, extruding, compression molding and the like. It may be sprayed on to surfaces, coated on surfaces by any suitable technique, and used to form cellular fillings in predefined spaces. Because of its nonflammability, it is particularly suited for wall panellings; because of its resistance to chemicals and moisture it may be used in making pipes, ducts, and the like; and because of its high dielectric properties it may be formed into insulators and the like. It will be appreciated that these are but a few exemplary uses for the inorganic resins of this invention.

In order that the invention may be more fully understood, the following examples are given by way of illustration.

In the following examples, the amounts of the various constituents are given in parts by weight. The two components were formulated separately in high speed blenders and then mixed or blended in a mechanical mixer. Components A and B were each at about 15.5°C (60°F) when mixing began. The mono aluminum phosphate is an aqueous solution analyzed to contain 8% $Al_2O_3$ and 33.7% $P_2O_5$, (solids concentration of 50 weight %) 1.49 $g/cm^3$; (47.5° Baumé) and the mono magnesium phosphate is an aqueous solution analyzed to contian 5.3% MgO and 32.6% $P_2O_5$, (solids concentration of 44 weight %) 1.42 $g/cm^3$ (42.9° Baumé). The silica filler was −0.043 mm (−325 mesh) and the wollastonite of component A is an acicular material with an aspect ratio of about 20:1 and surface area of 0.88 $m^2/g$. The reactive wollastonite of component B is an acicular material with an aspect ratio of about 5:1 and surface area of 1.55 $m^2/g$; and the magnesium oxide is a high purity technical grade material processed from magnesium rich brine, −0.043 mm (−325-mesh) and having a surface area of 0.75 $M^2/g$.

### Example 1

| Component A | |
|---|---|
| Mono magnesium phosphate | 100 parts |
| Silica | 100 |
| Wollastonite | 15 |

| Component B | |
|---|---|
| Tripotassium phosphate—50% solution | 25 |
| Magnesium oxide | 70 |
| Silicone (e.g. Dow Corning 772, Union Carbide 272) | 1 |

The resulting resin had a modulus of rupture of 750 psi (52.5 $kg/cm^2$) after two hours and 1470 psi (103 $kg/cm^2$) after four days; a 12.6% weight loss and a specific gravity of 1.64 after four days.

### Example 2

| Component A | |
|---|---|
| Mono magnesium phosphate | 100 parts |
| Silica | 100 |

| Component B | |
|---|---|
| Tripotassium phosphate—50% solution | 35 |
| Wollastonite | 49 |
| Magnesium oxide | 21 |
| Silicone | 1 |

This resin had a modulus of rupture of 700 psi (49 $kg/cm^2$) after four days.

### Example 3

Example 2 was repeated using the same component A, but changing the ratio of wollastonite to magnesium oxide in component B from 70/30 of Example 2 to 10/90. The effect of the magnesium oxide on resin strength was shown by the fact that the resin of this example had a modulus of rupture of 700 psi (49 $kg/cm^2$) after two hours and 1470 psi (103 $kg/cm^2$) after four days.

### Example 4

| Component A | |
|---|---|
| Mono aluminum phosphate | 100 parts |
| Silica | 100 |

| Component B | |
|---|---|
| Trisodium phosphate—5% solution | 30 |
| Wollastonite | 35 |
| Magnesium oxide | 35 |
| Silicone | 1 |

The resin had a modulus of rupture of 120 psi (8.4 kg/cm$^2$) after two hours and 300 psi (21 kg/cm$^2$) after four days.

### Example 5

| Component A | |
|---|---|
| Mono aluminum phosphate | 150 parts |
| Silica | 150 |
| Wollastonite | 23 |
| Hydrophobic fumed silica—10% methanol slurry | 2 |

| Component B | |
|---|---|
| Sodium tripolyphosphate—10% solution | 47 |
| Wollastonite | 70 |
| Magnesium oxide | 20 |
| Calcium carbonate | 5 |

This formed a cellular resin having a very uniform, fine cell structure and a density of 22.0 pounds/cubic foot (117 kg/m$^3$). The foam rise time was one minute and foam set time 2½ minutes.

### Example 6

A cellular resin was made using the same component A as in Example 5, but reducing the amount of dispersing agent to 36 parts and replacing the 90 parts of Wollastonite/magnesium oxide with 105 parts of Magnesium oxide. The resin had a very uniform fine cell structure, a density of 23.0 pounds/cubic foot (123 kg/m$^3$), a foam rise time of one minute and a foam set time of 1½ minutes.

### Example 7

The mono aluminum phosphate of Example 5 was replaced by an equal weight of mono magnesium phosphate to form a cellular resin having a density of 23.0 pounds/cubic foot (123 kg/m$^3$), a foam rise time of one minute and a foam set time of 1½ minutes.

### Example 8

The mono aluminum phosphate of Example 5 was replaced by an equal weight of mono magnesium phosphate to form a cellular resin having a density of 23 pounds/cubic foot (123 kg/m$^3$), a foam rise time of one minute and a foam set time of 1½ minutes.

### Example 9

Using the resin compositions of Examples 5—8 and varying the amount of calcium carbonate blowing agent used from 0.5 to 6.0 parts produced cellular resins having densities ranging from 32 to 10 pounds/cubic foot (171 to 53 kg/m$^3$), respectively.

### Example 10

| Component A | |
|---|---|
| Mono aluminum phosphate | 150 parts |
| Clay | 2 |
| Calcium stearate | 6 |

| Component B | |
|---|---|
| Sodium tripolyphosphate—10% solution | 50 parts |
| Wollastonite | 75 |
| Magnesium | 20 |
| Calcium carbonate | 4 |
| Silicone | 1 |

7

The resulting cellular resin had uniform, medium sized cells and a density of 25.6 pounds/cubic foot (137 kg/m$^3$). It had a foam rise time of 2 minutes and a foam set time of 7 minutes. Exposure of the cellular resin to temperatures over 500°C caused the calcium stearate to carbonize, smoke and leave a black deposit. Otherwise, the cellular resin retained its strength, nonflammability and other characteristics.

Example 11

A series of resin compositions were made up to form cellular resins using the same components A and B as in Examples 5 and 7, except that the amount and type of dispersing agent added to component B were varied. The pH of each component B was measured and its effect on the density of the resulting cellular material noted. The results are tabulated below in Table 1.

TABLE 1
Effect of component B pH on cellular resin formation

| Dispersing agent in component B | pH of component B | Cellular density, lbs/ft$^3$ (kg/m$^3$) | |
|---|---|---|---|
| | | MAP* | MMP** |
| Sodium tripoly-phosphate (10%) | 9.8 | 22.0(117) | 23.0(123) |
| Sodium hexameta-phosphate (25%) | 6.9 | 22.0(117) | 23.0(123) |
| Sodium hexameta-phosphate (50%) | 6.9 | 22.0(117) | 23.0(123) |
| Sodium acid pyro-phosphate (10%) | 4.2 | 20.0(107) | 23.0(123) |
| Tripotassium phos-phate (50%) | 11.5 | reacted with MAP* | No foam formed |

\*Mono aluminum phosphate
\*\*Mono magnesium phosphate

From these data, it will be seen that the dispersing agent should be essentially nonreactive and that it should not be used to the extent that it raises the pH of component B above that which prevents the release of carbon dioxide from the calcium carbonate blowing agent.

Example 12

A series of resin compositions were made up to form cellular resins using the same components A and B as in Example 5, except that the amount and type of water-repellant surfactant added to component A were varied. The effect of these variations on cell structure of the resulting resins is noted in the following Table 2.

8

## 0 136 378

### TABLE 2
#### Effect of surfactant on cell structure

| Surfactant | Wt.% surfactant | Cell struct./sz. inch (mm) |
|---|---|---|
| Hydrophobic fumed silica (10%) | 0.43 | Medium to fine/<0.020(0.51) |
| Hydrophobic fumed silica (10%) | 1.0 | Ultrafine/<0.010(0.25) |
| Titanate* | 0.43 | Large/<0.060(1.52) |
| Titanate* | 1.0 | Medium to lge./<0.040(1.02) |
| Silicone | 1.0 | Medium/<0.030(0.76) |
| Aluminum stearate | 1.0 | Medium/<0.030(0.76) |
| Calcium stearate | 1.0 | Medium/<0.030(0.76) |
| Calcium stearate | 1.5 | Medium/<0.030(0.076) |
| Zinc stearate | 1.0 | Medium/<0.030(0.76) |

*Titanate KR-55—An allyl di-tridecyl titanium phosphite.

It will be seen from these data that it is possible to predetermine and control cell size by the selection of the type and amount of surfactant used.

Example 13

This example illustrates the effect which the addition of a water-control agent has upon the strength and the moisture content of the resin formed. A first resin was made up in the manner described above using the following:

| Component A | |
|---|---|
| Mono magnesium phosphate | 100 parts |
| Silica | 100 |
| Wollastonite | 10 |

| Component B | |
|---|---|
| Sodium hexametaphosphate (50%) | 40 |
| Magnesium oxide | 50 |
| Silicone | 1 |

A second resin was made up on the manner described above using the following:

| Component A | |
|---|---|
| Mono aluminum phosphate | 100 parts |
| Alumina trihydrate | 100 |
| Wollastonite | 10 |

| Component B | |
|---|---|
| Trisodium phosphate (5%) | 24 |
| Magnesium oxide | 70 |
| Silicone | 1 |

The strengths of the resulting resins were measured and weight losses measured when they were heated to 200°C. Finally, they were heated until maximum weight loss was experienced. These results are tabulated in Table 3.

**0 136 378**

TABLE 3
Strength and weight losses of resins

| Item | Resin | |
|---|---|---|
| | First | Second |
| Strength—modulus of rupture, psi (kg/cm²) | 1420 (99.4) | 675 (47.3) |
| Weight loss, % total weight at 200°C | 10 | 12 |
| maximum | 12 | 27 |
| Temperature of maximum loss, °C | 350 | 700 |

It will be seen from these data that the alumina trihydrate present in the second formulation altered the amount of water retained in the cured resin and the temperature profile for the water removal from the resin.

#### Example 14

| Component A | |
|---|---|
| Mono aluminum phosphate | 100 parts |
| Silica | 100 |

| Component B | |
|---|---|
| 5% Trisodium phosphate solution | 35 |
| Wollastonite (5:1 aspect ratio) | 70 |

The resin had a modulus of rupture of 225 psi (15.8 kg/cm²) after four days and a specific gravity of 1.10.

The inorganic resins formed in accordance with this invention have many uses in their noncellular and cellular forms. Because of their nonflammability and nonsmoking they may be formed into such structural configurations as panels, walls, doors, piping, and ductwork and used in applications where the burning of such structures is not desirable or cannot be tolerated. These resins may be used as acoustical, electrical or thermal insulation. They may be used to form a poured-in-place foam, to repair cracks, to coat surfaces, and to serve as an adhesive. Unlike many organic resins, the inorganic resins of this invention are resistant to chemicals, organic and inorganic, and they are unaffected by ultraviolet radiation making them particularly suitable for outdoor use in a variety of climates. Finally, the resins of this invention are inexpensive relative to those formed of organic constituents.

**Claims**

1. A two-component system for mixing to form an inorganic resin, which comprises
   (a) a liquid component A comprising an aqueous solution of mono aluminium phosphate (aluminium dihydrogenophosphate) and/or mono magnesium phosphate (magnesium hydrogenophosphate), and
   (b) a liquid component B comprising an aqueous suspension of a phosphate-reactive constituent which is wollastonite and/or magnesium oxide, the viscosity of each component being such that the two components can be rapidly and thoroughly mixed so as to form a slurry which reacts exothermically to form an inorganic resin, characterised in that component B additionally comprises a non-reactive phosphate dispersing agent and in that components A and B each have a viscosity of from 700 to 10,000 centipoises (mPas) at 25°C.

2. A two-component system according to claim 1, in which component A includes an inert, low water-demand filler in an amount up to 50% by weight of the total weight of components A and B.

3. A two-component system according to claim 2, in which the inert filler is silica.

4. A two-component system according to claim 2, in which at least a portion of the filler is a preformed cellular material.

5. A two-component system according to claim 2, in which at least a portion of the filler is a finely divided, chemically hydrated water releasing agent.

6. A two-component system according to any of claims 1 to 5, in which component A also includes wollastonite which is substantially unreactive with mono aluminum phosphate or mono magnesium phosphate over the time required to formulate component A and to mix it with component B, the quantity of unreactive wollastonite being up to 10% by weight of the total weight of components A and B.

7. A two-component system according to claim 6, in which the substantially unreacted wollastonite is

10

further characterised as being a finely divided acicular material having an aspect ratio of at least 15:1 and a surface area of less than 1.0 m²/g.

8. A two-component system according to any of claims 1 to 7, in which one or both of component A and component B includes a water-repellent surfactant in a total amount of from 0.2% to 5% by weight of the total weight of components A and B.

9. A two-component system according to claim 8, in which the water-repellent surfactant is a hydrophobic fumed silica, a titanate, a silicone, a wax, or a stearate.

10. A two-component system according to any of claims 1 to 9, in which the aqueous solution of component A has a solids content of from 20 to 70 weight percent.

11. A two-component system according to any of claims 1 to 10, in which the amount of the aqueous solution of component A is from 20% to 70% by weight of the total weight of components A and B.

12. A two-component system according to any of claims 1 to 11, in which the reactive wollastonite of component B is a finely divided acicular wollastonite having an aspect ratio of less than 10:1 and a surface area of at least 1.0 m²/g and is present in component B in an amount of up to 40% by weight of the total weight of components A and B.

13. A two-component system according to any of claims 1 to 12, in which the non-reactive dispersing agent of component B is a polyphosphate in aqueous solution.

14. A two-component system according to any of claims 1 to 13 and suitable for forming a cellular resin, in which one or both of component A and component B includes a water-repellent surfactant, in which component B includes a blowing agent capable of releasing a gas by reaction, decomposition or vaporization in the slurry, and in which the dispersing agent is one which does not raise the pH of the slurry above 10.

15. A two-component system according to claim 14, in which the blowing agent is calcium carbonate in an amount of from 0.2% to 15% by weight of the total weight of components A and B.

16. A two-component system according to any of claims 1 to 15, in which the weight ratio of the aqueous solution of component A to the phosphate reactive constituent of component B is from 50/50 to 65/35.

17. A two-component system according to any of claims 1 to 16, in which the weight ratio of the mono aluminum phosphate-reactive constituent of component B is from 20/80 to 70/30.

18. A process for forming an inorganic resin which comprises mixing components A and B of the two-component system according to any of claims 1 to 17 to form a slurry in which the components react exothermically to set up as an inorganic resin.

19. A process according to claim 18, in which the slurry mixture is directed to a support surface capable of supporting the mixture until the reaction is completed.

20. A process according to claim 19, in which the support surface is a fiberglass mat and the mixture impregnates at least an upper surface of the mat to form a fiber-reinforced article.

21. A process according to claim 19, in which the support surface is a fiberboard and the resin adheres to the fiberboard to form a composite article.

## Patentansprüche

1. Zweikomponentensystem zum Mischen zur Bildung eines anorganischen Harzes, das

(a) eine flüssige Komponente A, die eine wässrige Lösung von Monoaluminiumphosphat (Aluminiumdihydrogenphosphat) und/oder Monomagnesiumphosphat (Magnesiumhydrogenphosphat) umfaßt, und

(b) eine flüssige Komponente B, die eine wässrige Suspension eines phosphatreaktiven Bestandteils umfaßt, der Wollastonit und/oder Magnesiumoxid ist, umfaßt, wobei die Viskosität jeder Komponente derart ist, daß die zwei Komponenten schnell und gründlich gemischt werden können zur Bildung einer Aufschlämmung, welche exotherm reagiert, um ein anorganisches Harz zu bilden, dadurch gekennzeichnet, daß die Komponente B zusätzlich ein nichtreaktives Phosphatdispergiermittel umfaßt und daß die Komponenten A und B jeweils eine Viskosität von 700 bis 10 000 Centipoises (mPa · s) bei 25°C besitzen.

2. Zweikomponentensystem nach Anspruch 1, worin die Komponente A ein inertes, wenig Wasser erforderndes Füllmittel in einer Menge von bis zu 50 Gew.-% des Gesamtgewichts der Komponenten A und B einschließt.

3. Zweikomponentensystem nach Anspruch 2, worin das inerte Füllmittel Siliciumdioxid ist.

4. Zweikomponentensystem nach Anspruch 2, worin wenigstens ein Teil des Füllmittels ein vorgeformtes zellenartiges Material ist.

5. Zweikomponentensystem nach Anspruch 2, worin wenigstens ein Teil des Füllmittels ein feinzerteiltes, chemisch hydratisiertes wasserfreisetzendes Mittel ist.

6. Zweikomponentensystem nach einem der Ansprüche 1 bis 5, worin die Komponente A ebenfalls Wollastonit einschließt, welcher im wesentlichen mit Monoaluminiumphosphat oder Monomagnesiumphosphat nicht reaktiv ist über die Zeit, die erforderlich ist, um Komponente A zuzubereiten und mit Komponente B zu mischen, wobei die Mengen an nichtreaktivem Wollastonit bis zu 10 Gew.-% des Gesamtgewichts der Komponenten A und B beträgt.

7. Zweikomponentensystem nach Anspruch 6, worin der im wesentlichen nichtreaktive Wollastonit

**0 136 378**

weiter dadurch gekennzeichnet ist, daß er ein feinzerteiltes nadelförmiges Material mit einem Aspektverhältnis von wenigstens 15:1 und einem Oberflächenbereich von weniger als 1,0 m²/g ist.

8. Zweikomponentensystem nach einem der Ansprüche 1 bis 7, worin eine oder beide der Komponenten A und B, ein wasserabstoßendes oberflächenaktives Mittel in einer Gesamtmenge von 0,2 bis 5 Gew.-% des Gesamtgewichts der Komponenten A und B einschließt.

9. Zweikomponentensystem nach Anspruch 8, worin das wasserabstoßende oberflächenaktive Mittel ein hydrophobes gerauchtes Siliciumdioxid (fumed silica), ein Titanat, ein Silikon, ein Wachs oder ein Stearat ist.

10. Zweikomponentensystem nach einem der Ansprüche 1 bis 9, worin die wässrige Lösung der Komponente A einen Feststoffgehalt von 20 bis 70 Gew.-% besitzt.

11. Zweikomponentensystem nach einem der Ansprüche 1 bis 10, worin die Menge der wässrigen Lösung der Komponente A 20 bis 70 Gew.-% des Gesamtgewichts der Komponenten A und B beträgt.

12. Zweikomponentensystem nach einem der Ansprüche 1 bis 11, worin der reaktive Wollastonit in der Komponente B ein feinzerteilter nadelförmiger Wollastonit mit einem Aspektverhältnis von weniger als 10:1 und einem Oberflächenbereich von wenigstens 1,0 m²/g ist und in der Komponente B in einer Menge von bis zu 40 Gew.-% des Gesamtgewichts der Komponenten A und B vorliegt.

13. Zweikomponentensystem nach einem der Ansprüche 1 bis 12, worin das nichtreaktive Dispergiermittel der Komponente B ein Polyphosphat in wässriger Lösung ist.

14. Zweikomponentensystem nach einem der Ansprüche 1 bis 13, das zur Bildung eines zellenartigen Harzes geeignet ist, worin eine oder beide der Komponenten A und B ein wasserabstoßendes oberflächenaktives Mittel einschließt, worin die Komponente B ein Treibmittel einschließt, das ein Gas durch Reaktion, Zersetzung oder Verdampfung in der Aufschlämmung freisetzen kann, und worin das Dispergiermittel ein solches ist, das den pH der Aufschlämmung nicht oberhalb 10 erhöht.

15. Zweikomponentensystem nach Anspruch 14, worin das Treibmittel Calciumcarbonat in einer Menge von 0,2 bis 15 Gew.-% des Gesamtgewichts der Komponenten A und B ist.

16. Zweikomponentensystem nach einem der Ansprüche 1 bis 15, worin das Gewichtsverhältnis der wässrigen Lösung der Komponente A zu dem phosphatreaktiven Bestandteil der Komponente B 50/50 bis 65/35 beträgt.

17. Zweikomponentensystem nach einem der Ansprüche 1 bis 16, worin das Gewichtsverhältnis des monoaluminiumphosphatreaktiven Bestandteils der Komponente B 20/80 bis 70/30 beträgt.

18. Verfahren zur Bildung eines anorganischen Harzes, bei dem die Komponenten A und B des Zweikomponentensystems nach einem der Ansprüche 1 bis 17 gemischt werden, um eine Aufschlämmung zu bilden, worin die Komponenten exotherm reagieren, um zu einem anorganischen Harz zu erhärten bzw. sich dazu aufzubauen.

19. Verfahren nach Anspruch 18, worin die Aufschlämmungsmischung zu einer Trägeroberfläche gebracht wird, welche die Mischung trägt, bis die Reaktion abgeschlossen ist.

20. Verfahren nach Anspruch 19, worin die Trägeroberfläche eine Glasfaserbahn bzw. -vlies ist und die Mischung wenigstens eine obere Oberfläche der Bahn imprägniert, um einen faserverstärkten Gegenstand zu bilden.

21. Verfahren nach Anspruch 19, worin die Trägeroberfläche eine Faserplatte ist und das Harz an der Faserplatte haftet, um einen Verbundgegenstand zu bilden.

## Revendications

1. Un système à deux composants pour mélange en vue de l'élaboration d'une résine minérale, qui comprend

a) un composant liquide A contenant une solution aqueuse de phosphate monoaluminique (dihydrogénophosphate d'aluminium) et/ou de phosphate monomagnésien (hydrogénophosphate de magnésium) et

b) un composant liquide B contenant une suspension aqueuse d'un constituant réactif vis à vis du phosphate qui est de la wollastonite et/ou de l'oxyde de magnésium, la viscosité de chaque composant étant telle que les deux composants peuvent être mélangés rapidement et énergiquement de manière à former une suspension qui réagit de façon exothermique en produisant une résine minérale, caractérisé en ce que le composant B contient en outre un agent dispersant au phosphate non réactif et que les composants A et B possèdent chacun une viscosité de 700 à 10.000 centipoises (mPas) à 25°C.

2. Système à deux composants selon la revendication 1, dans lequel le composant A renferme une charge inerte à faible besoin en eau en une quantité jusqu'à 50% en poids du poids total des composants A et B.

3. Système à deux composants selon la revendication 2, dans lequel la charge inerte est la silice.

4. Système à deux composants selon la revendication 2, dans lequel une partie au moins de la charge est une matière cellulaire préformée.

5. Système à deux composants selon la revendication 2, dans lequel une partie au moins de la charge est un agent libérant de l'eau chimiquement hydraté, finement divisé.

6. Système à deux composants selon l'une quelconque des revendications 1 à 5, dans lequel le composant A contient également une wollastonite qui est pratiquement non réactive vis à vis du phosphate

12

monoaluminique ou du phosphate monomagnésien pendant la durée nécessaire à la formulation du composant A et à son mélange avec le composant B, la quantité de wollastonite non réactive représentant jusqu'à 10% en poids du poids total des composants A et B.

7. Système à deux composants selon la revendication 6, dans lequel la wollastonite pratiquement non réactive se caractérise en outre par le fait qu'elle est une substance aciculaire finement divisée avec un rapport des aspects d'au moins 15:1 et une surface spécifique de moins de 1,0 m²/g.

8. Système à deux composants selon l'une quelconque des revendications 1 à 7, dans lequel un ou deux des composants A et B contiennent un agent de surface hydrophobe en une quantité totale de 0,2% à 5% en poids par rapport au poids total des composants A et B.

9. Système à deux composants selon la revendication 8, dans lequel l'agent de surface hydrophobe est une silice pyrogénique hydrophobe, un titanate, une silicone, une cire ou un stéarate.

10. Système à deux composants selon l'une quelconque des revendications 1 à 9, dans lequel la solution aqueuse du composant A possède un taux de solides de 20 à 70% en poids.

11. Système à deux composants selon l'une quelconque des revendications 1 à 10, dans lequel la quantité de la solution aqueuse de composant A représente 20% à 70% en poids du poids total des composants A et B.

12. Système à deux composants selon l'une quelconque des revendications 1 à 11, dans lequel la wollastonite réactive du composant B est une wollastonite aciculaire finement divisée avec un rapport des aspects de moins de 10:1 et une surface spécifique d'au moins 1,0 m²/g et est présente dans le composant B en une quantité jusqu'à 40% en poids du poids totale des composants A et B.

13. Système à deux composants selon l'une quelconque des revendications 1 à 12, dans lequel l'agent dispersant non réactif du composant B est un polyphosphate en solution aqueuse.

14. Système à deux composants selon l'une quelconque des revendications 1 à 13 et se prêtant à l'élaboration d'une résine cellulaire, dans lequel un ou deux des composant A et composant B contiennent un agent de surface hydrophobe, dans lequel le composant B renferme un agent d'expansion capable de libérer un gaz par réaction, décomposition ou vaporisation dans la suspension et dans lequel l'agent dispersant est un agent qui n'élève pas le pH de la suspension au-dessus de 10.

15. Système à deux composants selon la revendication 14, dans lequel l'agent d'expansion est du carbonate de calcium à la dose de 0,2% à 15% en poids du poids total des composants A et B.

16. Système à deux composants selon l'une quelconque des revendications 1 à 15, dans lequel le rapport pondéral de la solution aqueuse de composant A au constituant réactif vis à vis du phosphate du composant B s'étend de 50/50 à 65/35.

17. Système à deux composants selon l'une quelconque des revendications 1 à 16, dans lequel le rapport pondéral du phosphate monoaluminique au constituant réactif du composant B s'étend de 20/80 à 70/30.

18. Un procédé pour la fabrication d'une résine minérale qui consiste à mélanger les composants A et B du système à deux composants selon l'une quelconque des revendications 1 à 17 pour former une pâte dans laquelle les composants réagissent de façon exothermique en se transformant en une résine minérale.

19. Procédé selon la revendication 18, dans lequel le mélange pâteux est dirigé vers une surface-support capable de servir de support au mélange jusqu'à achèvement de la réaction.

20. Procédé selon la revendication 19, dans lequel la surface-support est un mat en fibres de verre et le mélange imprègne au moins la face supérieure du mat pour former un article renforcé par des fibres.

21. Procédé selon la revendication 19, dans lequel la surface-support est un panneau de fibres et la résine adhère au panneau de fibres pour former un article composite.